Europäisches Patentamt

European Patent Office

Office européen des brevets

(19)

(11) Publication number : **0 507 433 A1**

(12) **EUROPEAN PATENT APPLICATION**

(21) Application number : 92300813.0

(22) Date of filing : 30.01.92

(51) Int. Cl.⁵ : **H04N 5/76**

(30) Priority : 31.01.91 GB 9102102

(43) Date of publication of application :
07.10.92 Bulletin 92/41

(84) Designated Contracting States :
AT BE CH DE DK ES FR GB GR IT LI LU NL PT
SE

(71) Applicant : HOOPWELL Ltd
Unit B9, Larkfield Trading Estate
Larkfield, Maidstone, Kent ME20 6SW (GB)

(72) Inventor : Perkins, Alan Edward
'Prospect', Malling Road
Teston, Maidstone, Kent MD18 5AU (GB)
Inventor : Burrows, William Elvet
9, Heathgate, Wickham Bishops
Whitham, Essex CM8 3NZ (GB)

(74) Representative : Vaufrouard, John Charles
RUFFHEAD & VAUFROUARD Maidstone Road
(S.T.C. Site) Foots Cray
Sidcup Kent DA14 5HT (GB)

(54) Improvements relating to audio-visual systems.

(57) In or for use in an audio-visual system comprising a plurality of component units including a television receiver for serving as a visual display unit of the system and at least two other associated component units required to be selectively interconnected with each other and/or with the television receiver by means of interconnections including standard connectors and cordsets of the kind hereinbefore defined, an electric switching arrangement for establishing selected interconnections between component units of the system by way of further standard connectors forming part of the arrangement in response to appropriate command signal produced by a logic circuit which determines from signals received from component units of the system the required mode or modes of operation of the system and which applies the command signal to a switch device of the arrangement for automatically effecting the requisite switching operation according to user requirements.

EP 0 507 433 A1

This invention relates to audio-visual systems and relates more specifically to improved electrical interconnection arrangements for making connections between component units of such systems.

For the purpose of interconnecting a domestic television receiver forming a display unit in a multipurpose audio-visual system also including, for example, a video recorder and a satellite receiver or computer, the component units of the audio-visual system will usually be fitted with the socket parts of European standard connectors (i.e. so-called SCART or Peritel connectors) having a multiplicity of socket contacts dedicated to specific signals or conditions (e.g. voltage or impedance) applied to or from the component units of the system through interconnecting plug parts of the standard connectors shaped to preclude improper insertion of the plug parts into the socket parts and connected to other component units of the audio-visual system through European standard interconnecting cordsets or cables including specific types of conductors. The interconnections between component units (e.g. between the television receiver and the video recorder) may include one or more further standard connectors with a standard cordset extension, if required.

The use of these standard connectors having a limited number of appropriate cross-over connections between non-correspondingly numbered sockets and pins of the respective connector parts designated for audio signal transmission afford various benefits including:

1. Simplicity of installation and the avoidance of tuning by simply switching the television receiver to the audio visual channel concerned.

2. Avoidance of interference which can occur between the modulated output signal and the wanted television channels.

3. The avoidance of possible picture quality loss in the television receiver via the usual modulator connections.

4. Stereo audio coupling can be provided between units when required.

5. So-called RGB signals from a satellite receiver unit can be coupled to the television receiver.

6. Command signals for the television receiver can be provided.

It will readily be appreciated that with the incorporation of an increasing number of interconnected component units in such audio-visual systems, each component unit of the system usually having its own remote control handset, the provision of selective interconnection between all of the component units becomes more complex.

One problem of selective interconnection to which the present invention is especially addressed arises due to the fact that during recent years most manufacturers of audio-visual equipment have adopted the aforesaid European standard interconnection arrangement utilising SCART connectors, but only single socket parts of such connectors have been fitted to most television receivers and video equipment. Thus access to or from such component units of the audio-visual system must be made via the single connector sockets and consequently some form of selective switching arrangement needs to be provided in a connecting link between each of the component units and other units of the system in order to facilitate selective interconnection between various component units, according to user requirements.

Known switching arrangements for providing selective interconnection between a number of component units of an audio-visual system as hereinbefore described involve the use of manually operable somewhat bulky switching devices or the provision of additional remote control handsets.

According to the present invention therefore there is provided in or for use in an audio-visual system comprising a plurality of component units including a television receiver as a visual display system unit of the system and at least two other associated component units for interconnection with each other and/or with the television receiver by means of standard connectors and cordsets of the above-described kind, an electric switching arrangement for providing selective interconnection between the component units of system, characterised in that the electric switching arrangement is connected to and from the component units by way of standard connectors of the arrangement and includes a logic circuit for determining, in dependence upon signals and/or electrical conditions received from the associated component units over the standard connectors, the requisite mode or modes of operation of the audio-visual system and to accordingly produce operation of an associated switch device of the arrangement for providing appropriate selective connections between component units of the audio-visual system.

The electric switching arrangement according to the present invention provides selective switching between component units without the need for the tedious manual operation of known somewhat bulky manual switching devices or for the use of yet another remote control handset in addition to the remote handset(s) normally provided for the remote control of the television receiver, video recorder etc.

In carrying out the present invention the electric switching arrangement may comprise a signal processor for detecting the presence of a composite video signal received from an operative satellite receiver and for transmitting signals to the logic circuit. A video recorder status circuit may also be provided for detecting the status of the video recorder (e.g. play, record, etc.) and for determining the priority given to inputs to the appertaining standard connector to which the video recorder is connected.

The logic circuit is accordingly provided with the requisite information regarding user requirements and can determine priority of one user requirement over another in order to provide an appropriate command signal to the switch device which, in dependence upon other user requirement signals received from the component units of the system as a result of remote handset operation, performs the requisite switching function or functions.

By way of example the present invention will now be described with reference to the accompanying drawings in which:

Figure 1 shows a block schematic diagram of an audio-visual system including an electric switching arrangement according to the present invention;

Figure 2 is a chart showing ten different switching logic options for the switching arrangement of Figure 1;

Figures 3 to 11 show block schematic diagrams of the electric switching arrangement according to Figure 1 in which various internal connections between components of the switching arrangement and thus the functional behaviour of the arrangement are indicated for ten different applications or switching logic options of the switching arrangement depicted in the chart of Figure 2;

Figure 12 is a switching diagram illustrating switching logic of the switching arrangement of Figure 1;

Figure 13 shows an exemplary embodiment of the switching arrangement according to the present invention.

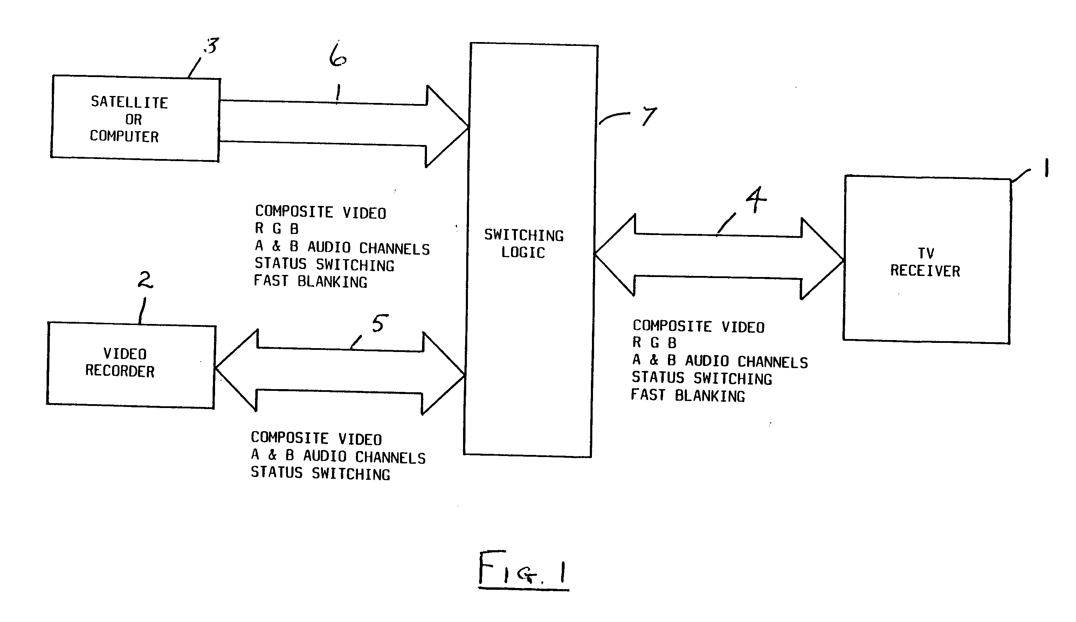

Referring to Figure 1, the audio-visual system illustrated block schematically comprises a television receiver 1 which serves as a visual display unit of the system, a video recorder 2 and a satellite receiver or computer 3.

In accordance with European standards relating to interconnections between audio-visual system component units, the television receiver 1, video recorder 2 and the satellite receiver or computer 3 are fitted with the socket parts of standard connectors (i.e. so-called SCART or Peritel connector) hereinbefore described. The plug parts of these connectors are received by the socket parts and have the contact pins thereof connected to specific conductors of standard cordsets indicated schematically at 4,5 and 6.

In accordance with the present invention the audio-visual system includes an electric switching arrangement 7 provided with the socket parts of three European standard connectors which receive the plug parts of the connectors which will be fitted to the ends of the standard cordsets 4,5 and 6 incoming to the electric switching arrangement 7. The switching arrangement 7 serves for selectively interconnecting the television receiver 1, video recorder 2 and satellite or computer 3, as appropriate, in dependence upon the user's requirements.

Such selective switching which is achieved by the use of a logic circuit enables the requisite interconnections between system component units to be made without the need for the provision of additional standard connectors at the television receiver and video recorder and is therefore ideally suited for use with many existing television receivers and video recorders fitted with single European standard connectors.

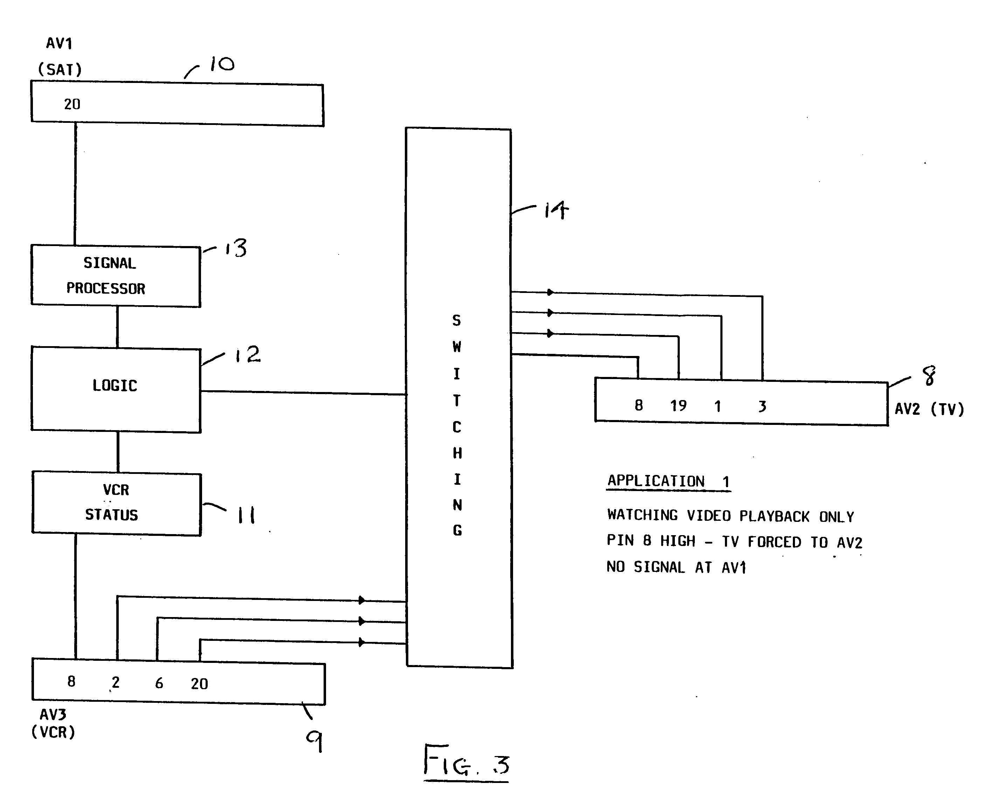

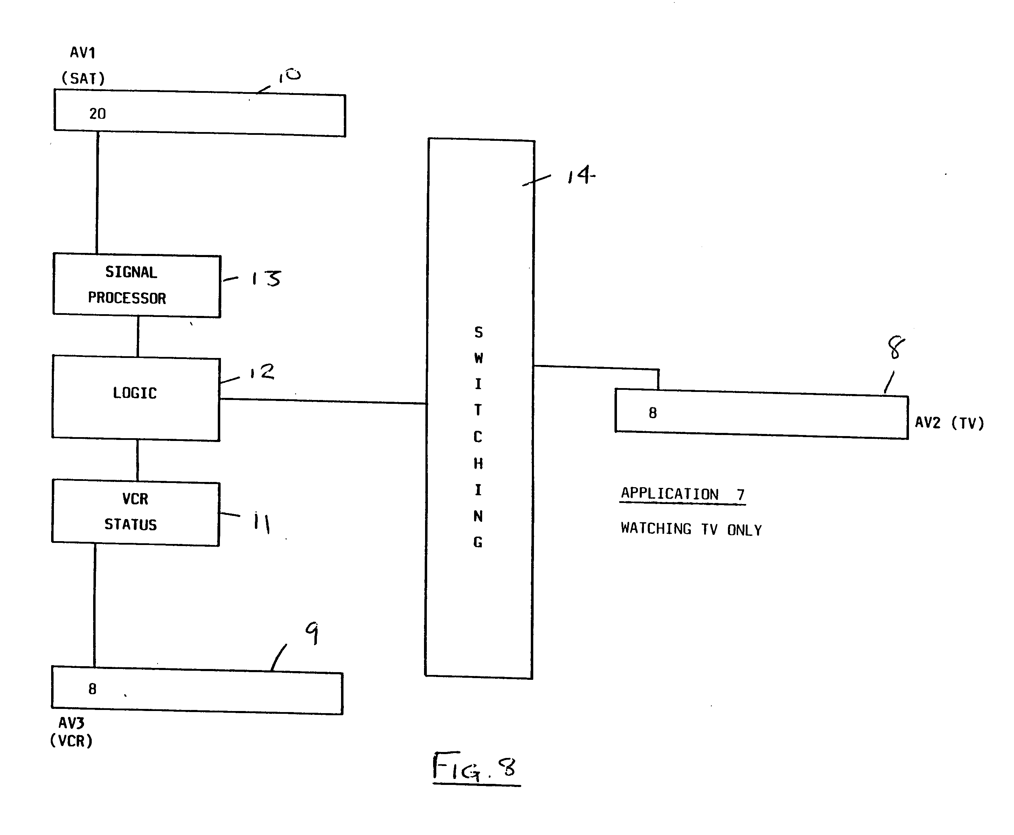

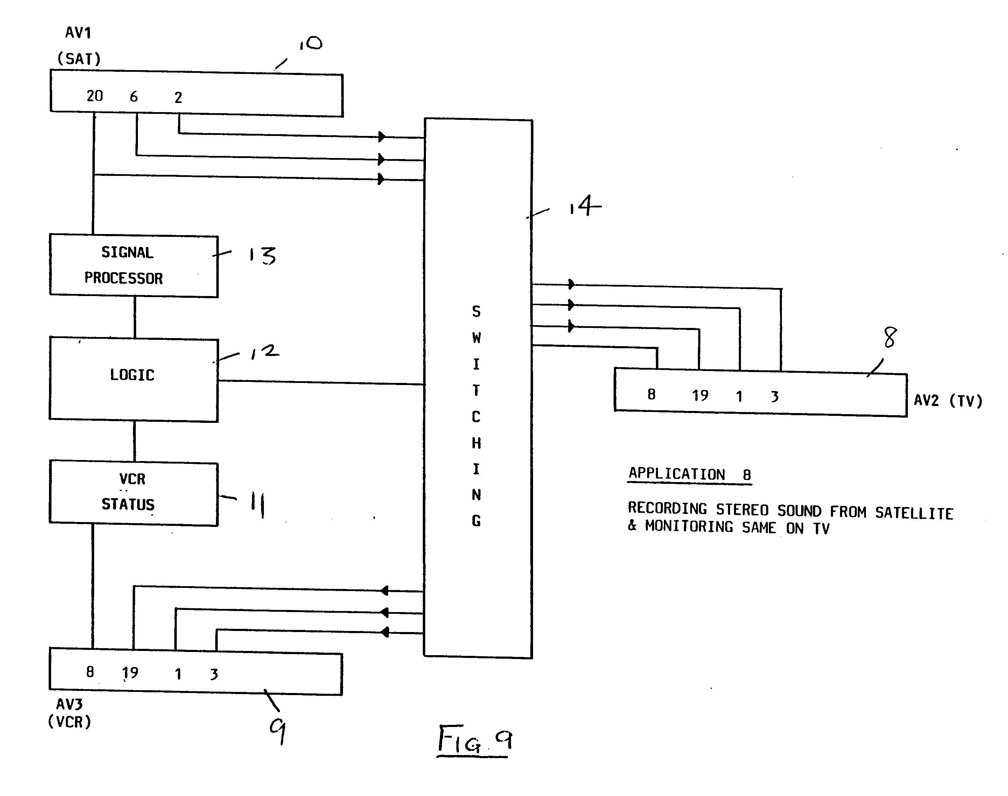

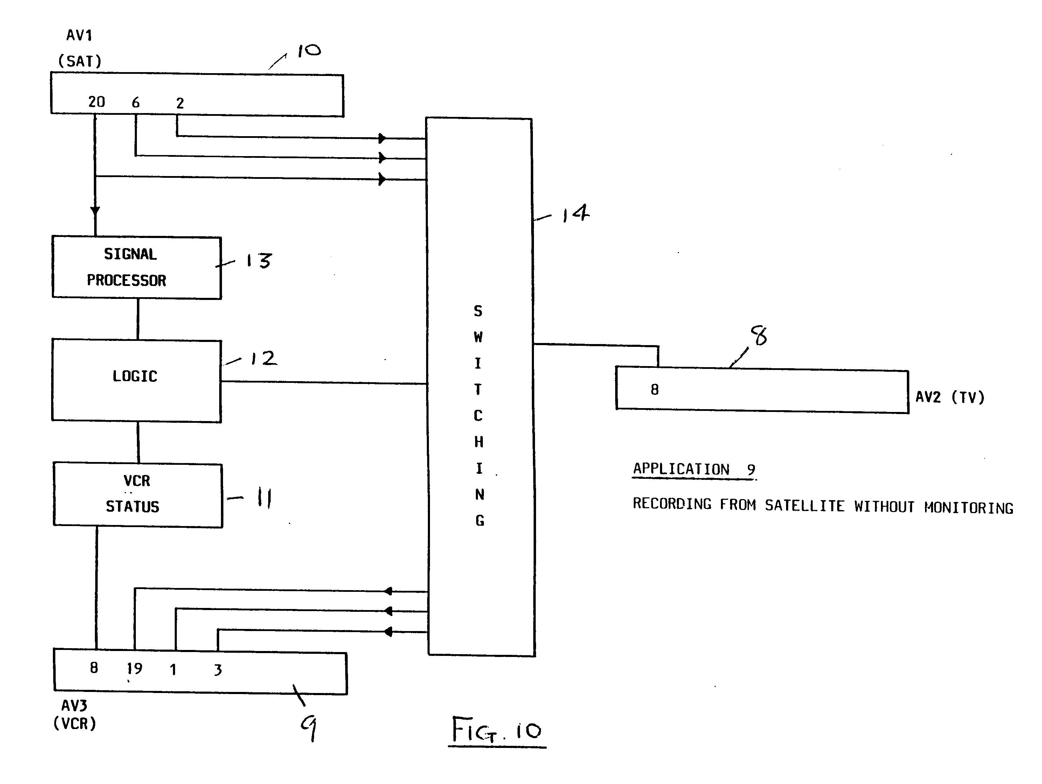

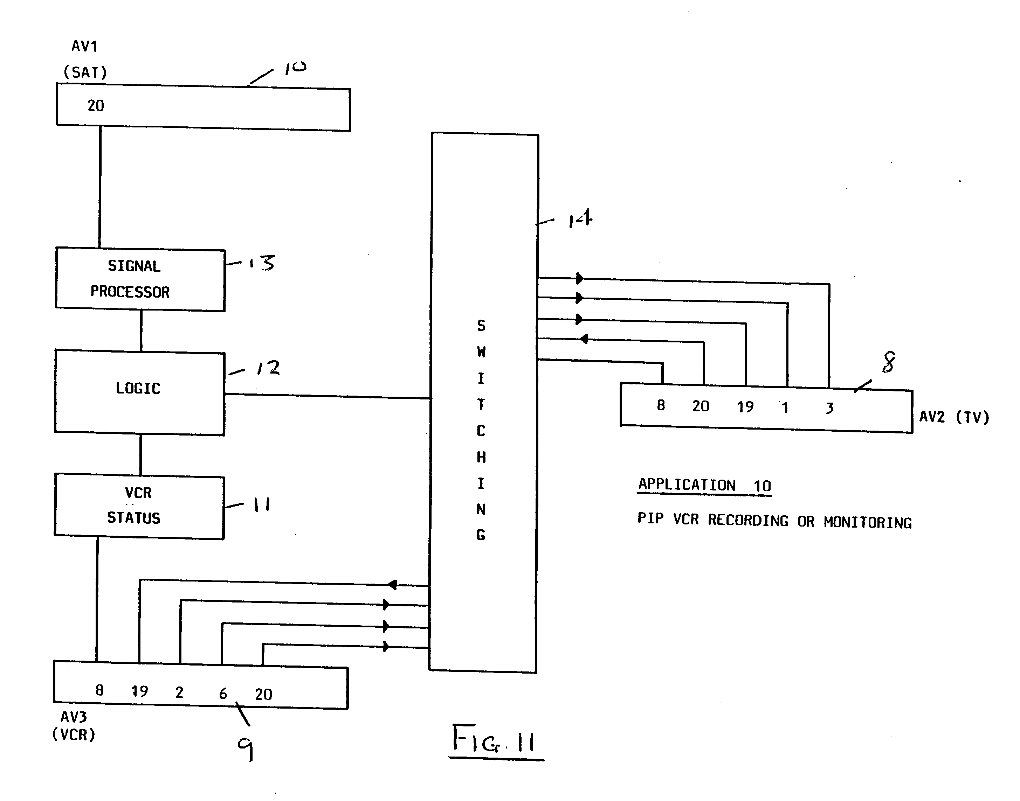

Referring now to Figures 3 to 11, these depict in block schematic form the interconnected component parts of the electric switching arrangement of Figure 1. As will be seen, the switching arrangement comprises socket parts 8,9 and 10 of European standard connectors. It may here be mentioned that the numerals contained within the blocks 8,9 and 10 indicate the dedicated socket contact numbers of such standard connectors, as will be well understood by those skilled in the art.

The electronic switching arrangement also comprises a video recorder status circuit 11 which is connected to a logic circuit 12 and which detects the status (e.g. play, record etc.) and gives priority to the recorder 2 (Figure 1), if necessary. The logic circuit 12 may also receive an input from an operative signal processor 13 connected to the satellite 3 (Figure 1) through the standard connector socket part 10.

The logic circuit 12 is designed to provide a switching command signal based on information derived from the video status circuit 11 and the signal processor 13. This command signal is applied to an electric switching circuit 14 which accordingly operates to establish the appropriate interconnections between component units of the system in order to meet the users' demands or requirements and also takes into account any priority requirement which requires another indicated requirement to be overridden.

In order to explain the functional behaviour of the electric switching arrangement, Figures 3 to 11 will be considered in conjunction with the following logic options for providing appropriate interconnections by means of the switching arrangement. These logic options which will usually be selected by the user by the appropriate operation of a remote control handset are as follows:

1. Watching video playback only.
2. Watching a terrestrial broadcast and recording a terrestrial broadcast.
3. Watching a satellite transmission only.
4. Watching a satellite transmission and recording it at the same time.
5. Video playback but satellite receiver (or computer) left on.
6. Watching a satellite transmission and recording a terrestrial broadcast.

7. Watching a terrestrial broadcast only.

8. Listening to a satellite radio transmission and recording it.

9. Recording a satellite transmission without monitoring it.

10. Using a P.I.P. VCR in record or monitor modes.

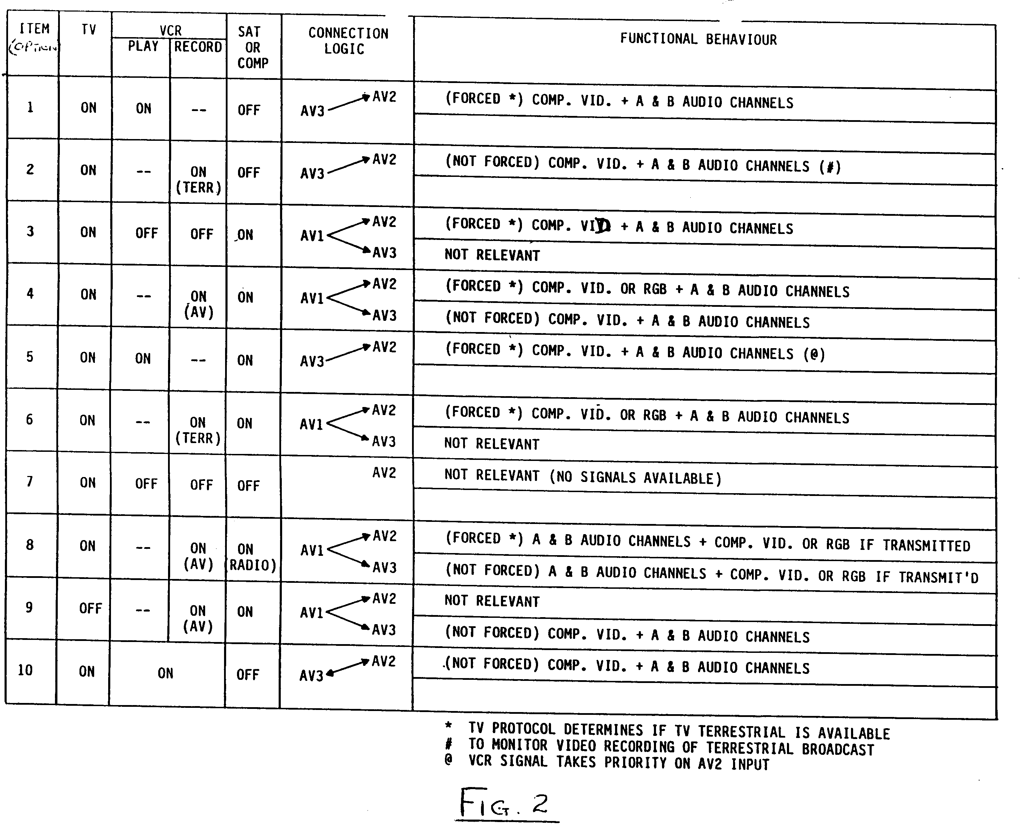

These logic options correspond to those similarly numbered in the chart of Figure 2 which indicates the connecting switching logic provided between the television receiver connector (AV2), satellite receiver connector (AV1) and the video recorder connector (AV3) in Figures 3 to 11.

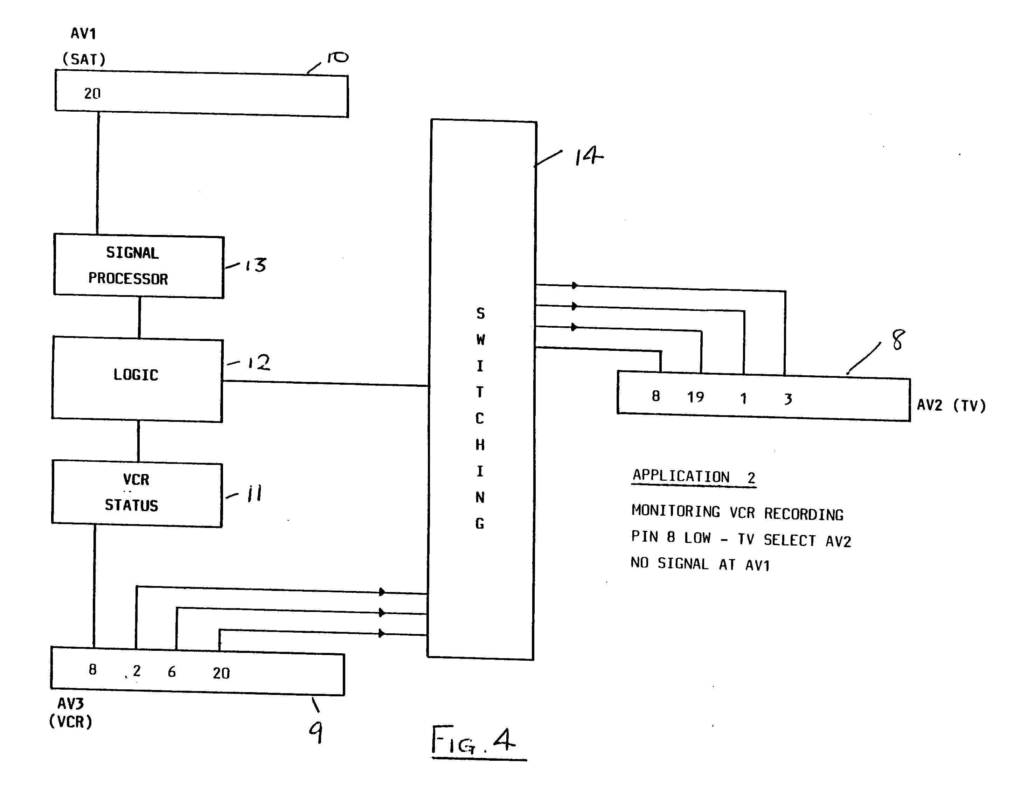

As will be seen from the chart the logic options 1 and 2 can be provided by the signal and switching connections indicated in Figures 3 and 4 of the drawings.

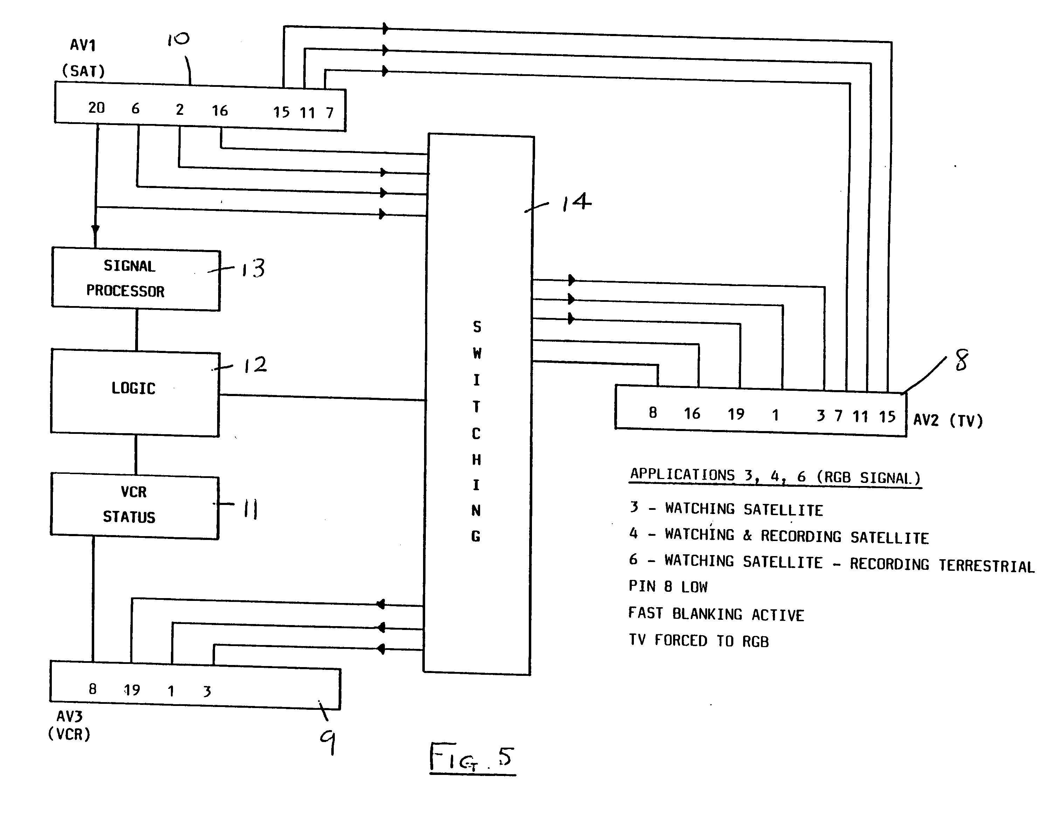

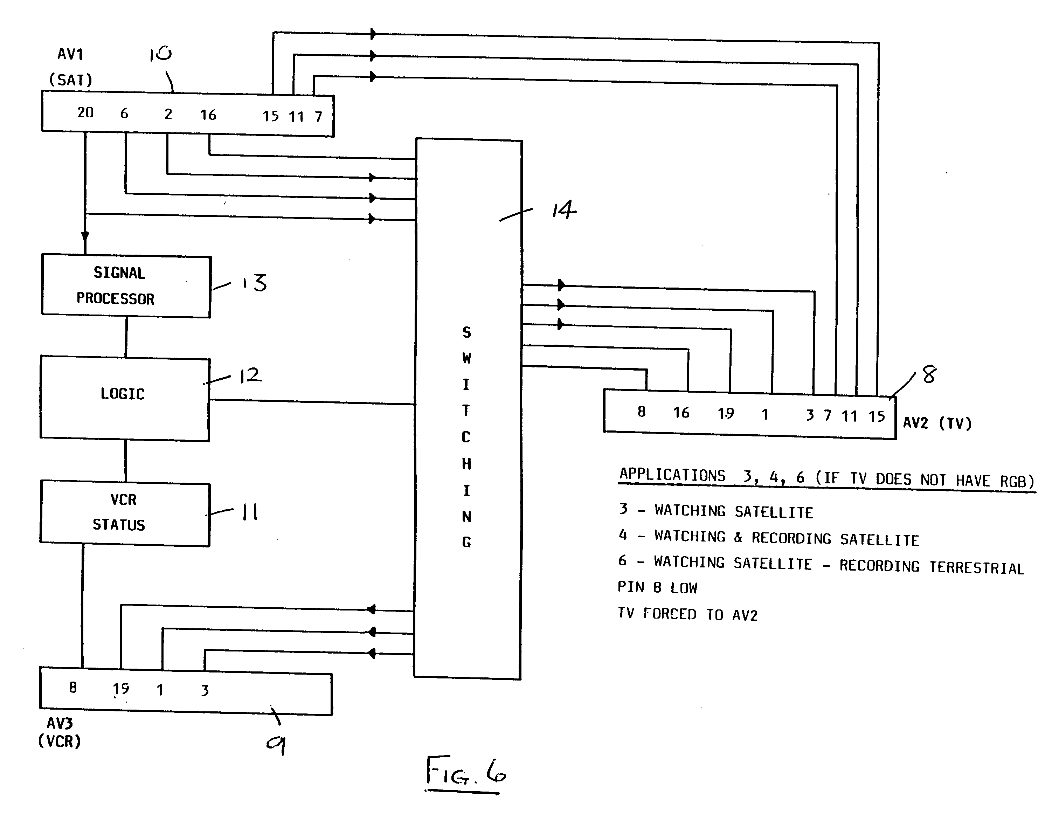

In the case of logic options 3, 4 and 6, the signal and switching connections indicated in Figure 5 or Figure 6 are appropriate according to whether the television receiver has RGB or not.

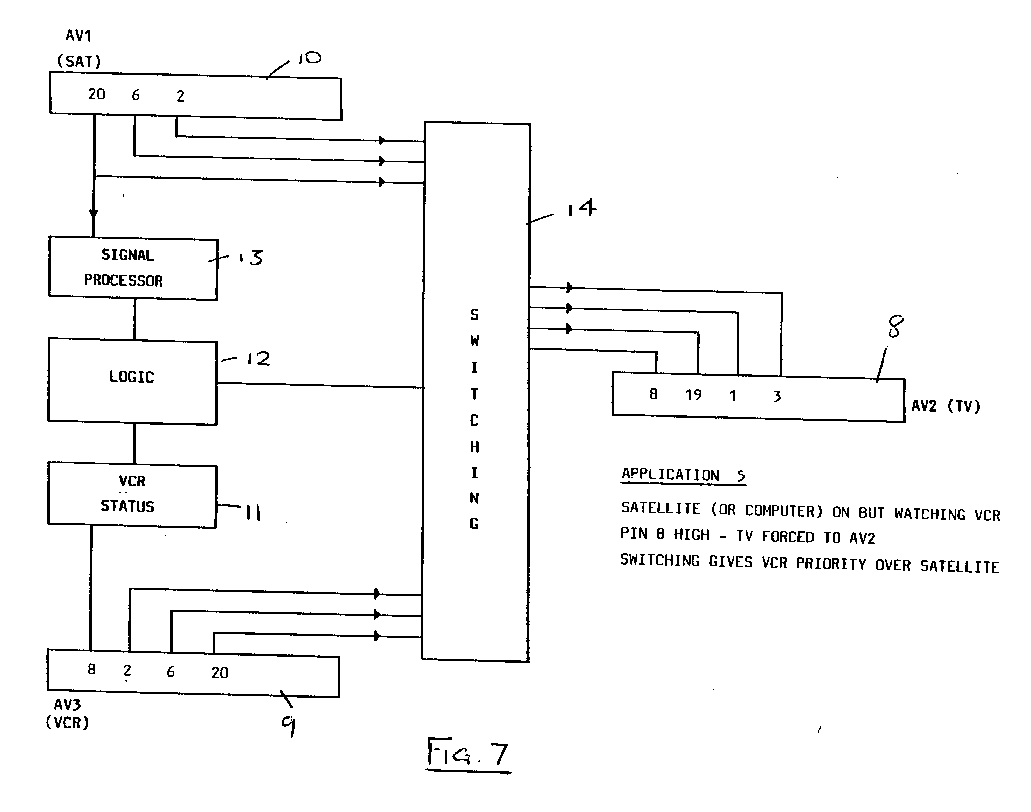

As regards logic options 5,7,8,9 and 10 these can be provided by the signal and switching connections indicated in Figures 7,8,9,10 and 11, respectively.

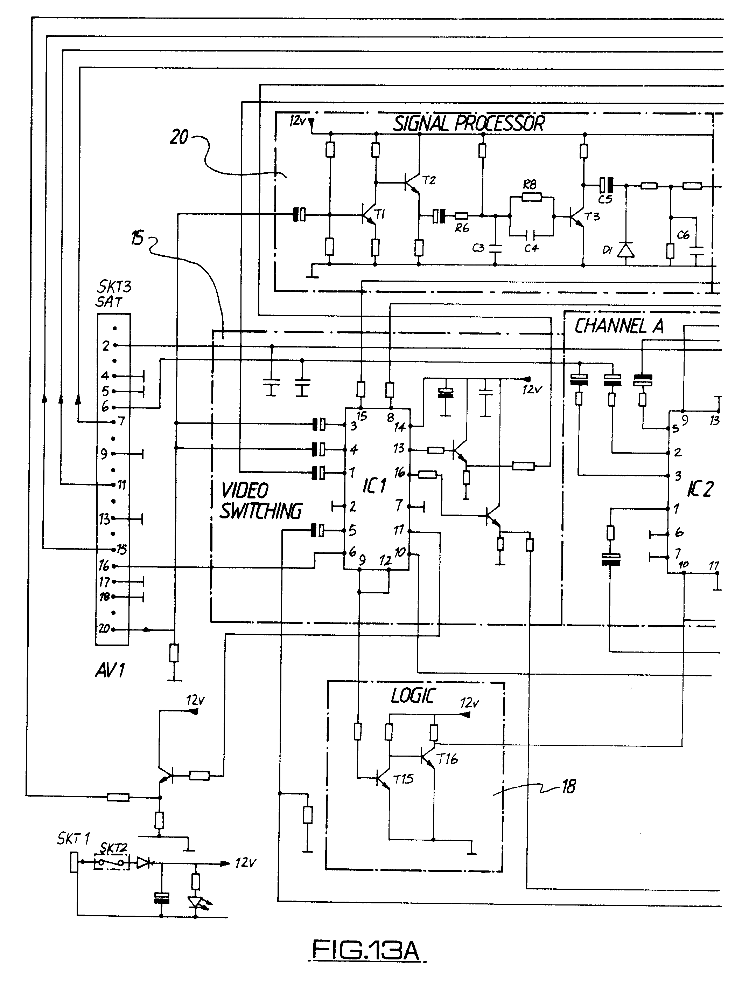

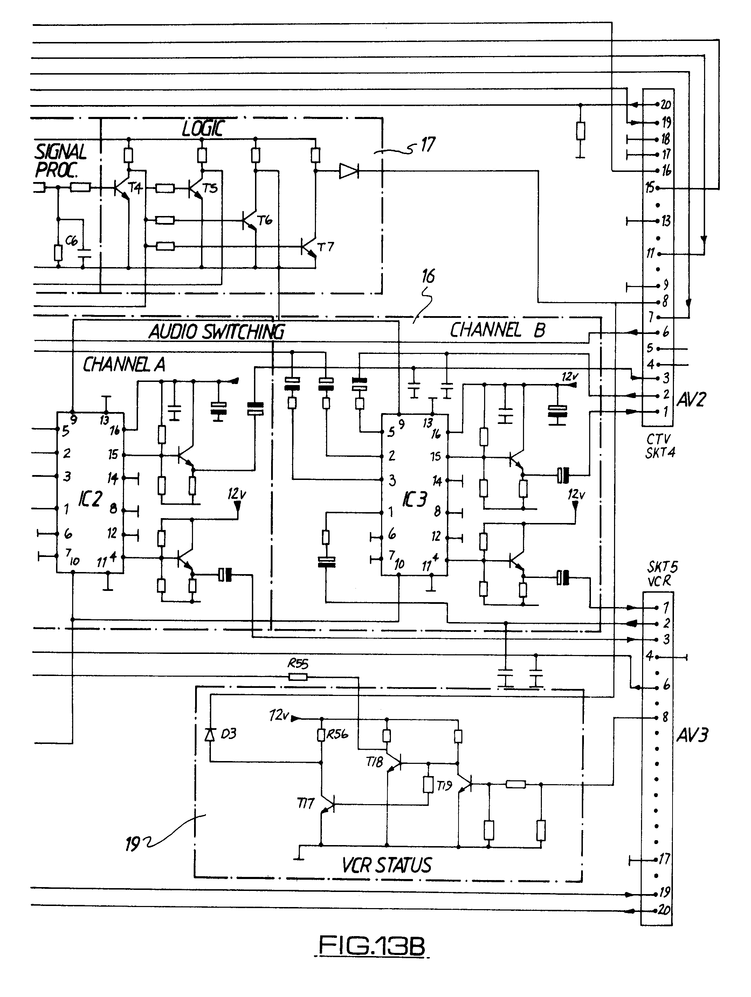

Before describing the operation of the switching arrangement shown in Figure 13, the switching protocol for the arrangement is as follows:-

Switching Protocol

The television receiver is operated in the audio-visual mode. The video recorder 2 and a satellite receiver or (computer) 3 signal source is to be selected.

1. If the recorder is switched to playback mode the playback signal is conveyed to the television receiver (priority over any other signal source).

2. If the recorder is switched to stop mode the recorder terrestrial channel signal replaces the playback signal unless the satellite (or computer) signal source is present, in which case the satellite (or computer) signal is conveyed to the television receiver 1.

3. If the video recorder 2 is switched to record mode the terrestrial signal will be recorded unless the satellite (or computer) signal source is present in which case the satellite (or computer) signal may be recorded. The switching of the recorder from terrestrial to audio-visual input signal is dependent upon the design of the recorder.

By signal source is meant the composite video and dual channel audio signals available as outputs at the SCART connector sockets of the equipment. RGB component signals from BSB satellite equipment or from some brands of computer will be displayed on the television receiver when the switching protocol as above permits. However, RGB component signals cannot be recorded.

Composite video signal or RGB signals are indicated in the SCART protocol by a status voltage present or absent on pin 8 of the SCART connector and a fast blanking signal present or absent on pin 16 of the connector.

Referring now to Figure 13 of the drawings, the switching arrangement illustrated includes video and audio (channels A and B) switching circuits 15 and 16, respectively. These circuits consist of electric switches controlled by output signals from the logic circuit arrangement including two logic circuits 17 and 18 which are designed to interpret the presence of and status of various signals provided by the component circuits connectible by the switching arrangement.

The switching arrangement also includes a video status circuit 19 which determines the priority given to the inputs on the connecting socket AV3. A signal processor 20 determines without ambiguity the presence of a composite video signal at the connecting socket AV1.

Referring now to the derivation of switching logic for the circuit arrangement of Figure 13, the switching arrangement has to route independently the composite video and channel A and channel B audio signals.

AV2 is required to receive either the AV1 or AV3 signals.

AV3 is required to receive either the AV1 or AV2 signals.

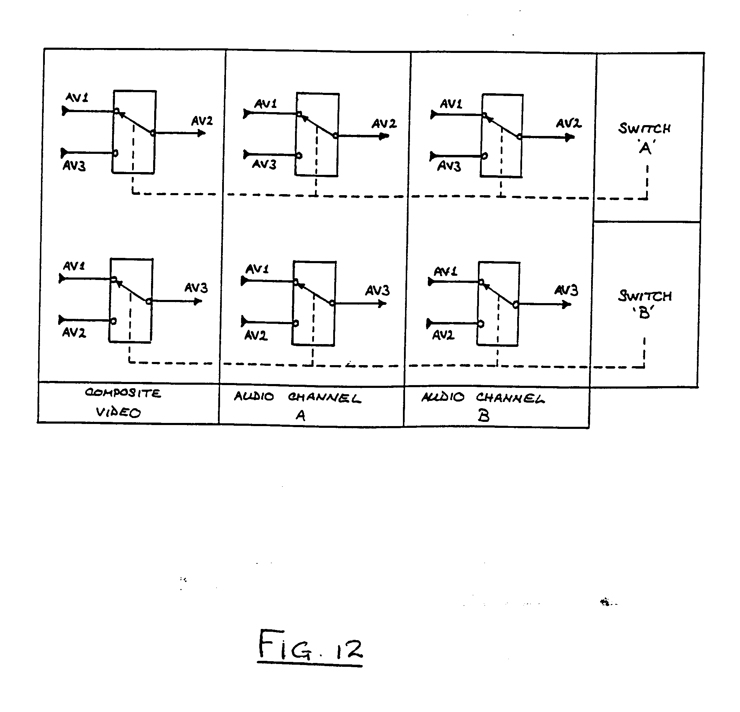

This logic is illustrated diagrammatically as requiring six changeover switches arranged in pairs as shown in Figure 12 of the drawings. All the operating requirements can then be met by common switching logic to each pair.

To determine the automatic switching logic it is necessary to derive the control signals from the status of the signal sources at connectors AV1, AV2 and AV3. VCR's provide a status signal on pin 8 of the Peritel (SCART) connector. Unfortunately, satellite receivers and other apparatus likely to be connected to connector AV1 do not always provide a status signal. It is therefore necessary to deduce the status of the connector AV1 input by detecting the presence of the composite video signal.

The VCR (video recorder) can be in PLAYBACK or RECORD/MONITOR and the satellite receiver can be ON or OFF thereby creating the following tables of logic state:

| STATUS | | STATUS | | SIGNALS TO AV2 (TV) | | |
|---|---|---|---|---|---|---|
| AV1 | LOGIC | AV3 | LOGIC | SOURCE | SW A | PURPOSE |
| OFF | 0 | REC | 0 | AV3 | 0 | TV TO VCR A.V IN |
| OFF | 0 | P/B | 1 | AV3 | 0 | TO MONITOR VCR PLAYBACK |
| ON | 1 | REC | 0 | AV1 | 1 | TO MONITOR SAT RECORDING |
| ON | 1 | P/B | 1 | AV3 | 0 | PLAYBACK PRIORITY FOR VCR |

| STATUS | | STATUS | | SIGNALS TO AV3 (VCR) | | |
|---|---|---|---|---|---|---|
| AV1 | LOGIC | AV3 | LOGIC | SOURCE | SW B | PURPOSE |
| OFF | 0 | REC | 0 | AV2 | 0 | TO SUPPLY AV2 FOR VCR PIP VCR TERRESTRIAL |
| OFF | 0 | P/B | 1 | AV2 | 0 | TO SUPPLY AV2 FOR VCR PIP VCR PLAYBACK |
| ON | 1 | REC | 0 | AV1 | 1 | TO RECORD AND MONITOR SAT OR PIP SAT ON VCR TERRESTRIAL |
| ON | 1 | P/B | 1 | AV1 | 1 | TO SUPPLY AV1 FOR VCR PIP ON PLAYBACK |

The logic for switch A (channel A) is AV1.VCR - a two input AND gate.

Integrated circuit IC1 used for the video switching has an OR logic gate within it. This is used by taking the AV1 status and 'ORing' it with the VCR status, giving:

$$AV1 + VCR = SWITCH A LOGIC$$

The logic for switch B (channel B) is AV1 status output logic.

The VCR status circuit (AV3 Status Detection) 19 comprises transistors T17, T18 and T19.

If pin 8 of connector AV3 is logic high, transistor T19 is turned on which in turn turns transistor T17 off. This causes pin 8 of AV2 to be pulled logic high by the circuit of resistor R56 and diode D3. This has the action of putting a suitable television receiver into the A.V mode.

At the same time transistor T18 is also turned off putting a logic high on pin 10 of IC1 via resistor R55. Conversely, if pin 8 of AV3 is logic low, transistor T19 is turned off putting transistors T17 and T18 on. This has the action of turning off diode D3 releasing pin 8 of AV2 from influence by the VCR status circuit 19 and putting a logic low on pin 10 of integrated circuit IC1 via resistor R55.

The signal processor circuit 20 (AV1 Status Detection) comprises transistors T1, T2 and T3.

When a video signal is present on pin 20 of AV1 transistor, T1 is biased to favourably amplify the sync pulse section of that signal irrespective of the video content. Transistor T2 is an emitter follower to isolate the function of transistor T1 from the following circuitry. Transistor T3 is then biased such that only sync pulses appear at its collector over a wide range of varying amplitude of video content. Resistor R6 and capacitor C3 filter H.F. noise and resistor R8 and capacitor C4 extend the range over which automatic biasing functions.

The stable negative going sync pulses at the collector of transistor T3 are D.C. restored to ground by the action of capacitor C5 and diode D1. Thus a substantially stable positive D.C. potential is stored on capacitor C6 as a direct result of the presence of a composite video signal on pin 20 of AV1.

The logic circuits 17 and 18 comprise transistors T4, T5, T6, T7 and T15, T16.

The positive potential developed across capacitor C6 by the signal processing circuit when a composite video signal is present on pin 20 of AV1 biases transistor T4 on. When no signal is present at pin 20 of connector AV1, transistor T4 is biased off.

Transistor T4 performs the function of inverting the AV1 status signal giving AV1 status logic. Transistor T4 drives into three inverting buffer transistors T5, T6 and T7 which provide the AV1 status logic. Transistor T5 drives pin 15 of integrated circuit IC1 and determines the video route from pin 3 to pin 16 (pin 15 high) or pin 1 to pin 16 (pin 15 low). Transistor T6 drives pin 9 of integrated circuit IC2 and pin 9 of integrated circuit

5

IC3 and determines the audio channel route from pin 3 to pin 4 (pin 9 high) or pin 5 to pin 4 (pin 9 low). Transisistor T7 via diode D2 pulls pin 8 on AV2 high to pull the TV connected to AV2 socket into the A.V mode provided the television receiver is designed to do so otherwise the user switches the television receiver to A.V mode.

The AV1 logic on the collector of transistor T4 is also connected via resistor R22 to pin 8 of circuit IC1, defining one input of an OR gate. The other input of this OR gate is pin 10 which receives AV3 status logic from transistor T18 via resistor R55.

The logic output of the OR gate of circuit IC1 is pin 9 which drives pin 12 of circuit IC1 directly and pin 10 of circuit IC2 and pin 10 of circuit IC3 via a double inverting buffer consisting of the transistors T15 and T16 which ensure the correct switching level.

The status of pin 12 of circuit IC1 determines the video route from pin 5 to pin 13 (pin 12 high) or pin 4 to pin 13 (pin 12 low).

The status of pins 10 of integrated circuits IC2 and IC3 determines the audio channel route from pin 1 to pin 15 (pin 10 high) or pin 2 to pin 15 (pin 10 low).

The RGB source circuit will be directly connected between pins 7, 11 and 13 of connector AV1 (SKT3 SAT) and AV2 (SKT4 TV) for conveyance of Red, Green and Blue component signals.

The associated fast blanking signal present on pin 16 of AV1 (SKT3 SAT) is connected to pin 6 of circuit IC1. The status of pin 10 of circuit IC1 determines the fast blanking route from pin 6 to pin 11 (pin 10 low). Pin 10 logic is controlled by the VCR status signal derived from the collector of transistor T8 via resistor R55.

Although in the interests of clarity and simplicity the specific embodiment illustrated in Figure 13 of the drawings includes undesignated electrical components it will be readily apparent to persons skilled in the art how such components operate to produce the requisite operation of the various circuits forming part of the overall selective switching arrangement according to the invention.

## Claims

1. In or for use in an audio-visual system comprising a plurality of component units including a television receiver for serving as a visual display unit of the system and at least two other associated component units required to be selectively interconnected with each other and/or with the television receiver by means of interconnections including standard connectors and cordsets of the kind hereinbefore defined, an electric switching arrangement for providing selective interconnection between component units of the system, characterised in that the electric switching arrangement is connected to and from component units by way of standard connectors forming part of the arrangement and includes logic circuit means which determines from signals received from component units of the system the required mode or modes of operation of the system and which applies appropriate a command signal to a switch device of the arrangement for automatically effecting the requisite switching operation according to user requirements.

2. An electric switching arrangement as claimed in claim 1, characterised in that the component units of the system include a video recorder and in that the logic circuit means receives information for determining its command signal from a video recorder status circuit of the arrangement for detecting the instantaneous status (e.g. play, record etc.) and any priority of the video recorder.

3. An electric switching arrangement as claimed in claim 1 or claim 2, charcterised in that the component units of the system include a satellite receiver and in that the logic circuit means is arranged for receiving an input from a signal processor which is connected for receiving satellite transmission when the satellite receiver is in operation.

4. An electric switching arrangement as claimed in any preceding claim, characterised in that the switch device comprises an electric audio switch serving two audio channels.

5. An electric switching arrangement as claimed in any preceding claim, characterised in that the logic circuit means comprises two logic circuits.

6. An electric switching arrangement as claimed in claims 2, 3 and 5, characterised in that the logic circuits are operatively associated with the signal processor and the video recorder status circuit, respectively.

SATELLITE OR COMPUTER 3

6

SWITCHING LOGIC 7

4

TV RECEIVER 1

COMPOSITE VIDEO
R G B
A & B AUDIO CHANNELS
STATUS SWITCHING
FAST BLANKING

VIDEO RECORDER 2

5

COMPOSITE VIDEO
R G B
A & B AUDIO CHANNELS
STATUS SWITCHING
FAST BLANKING

COMPOSITE VIDEO
A & B AUDIO CHANNELS
STATUS SWITCHING

FIG. 1

EP 0 507 433 A1

| ITEM (OPTION) | TV | VCR PLAY | VCR RECORD | SAT OR COMP | CONNECTION LOGIC | FUNCTIONAL BEHAVIOUR |
|---|---|---|---|---|---|---|
| 1 | ON | ON | -- | OFF | AV3 → AV2 | (FORCED *) COMP. VID. + A & B AUDIO CHANNELS |
| 2 | ON | -- | ON (TERR) | OFF | AV3 → AV2 | (NOT FORCED) COMP. VID. + A & B AUDIO CHANNELS (#) |
| 3 | ON | OFF | OFF | ON | AV1 → AV2 / → AV3 | (FORCED *) COMP. VID + A & B AUDIO CHANNELS / NOT RELEVANT |
| 4 | ON | -- | ON (AV) | ON | AV1 → AV2 / → AV3 | (FORCED *) COMP. VID. OR RGB + A & B AUDIO CHANNELS / (NOT FORCED) COMP. VID. + A & B AUDIO CHANNELS |
| 5 | ON | ON | -- | ON | AV3 → AV2 | (FORCED *) COMP. VID. + A & B AUDIO CHANNELS (@) |
| 6 | ON | -- | ON (TERR) | ON | AV1 → AV2 / → AV3 | (FORCED *) COMP. VID. OR RGB + A & B AUDIO CHANNELS / NOT RELEVANT |
| 7 | ON | OFF | OFF | OFF | AV2 | NOT RELEVANT (NO SIGNALS AVAILABLE) |
| 8 | ON | -- | ON (AV) | ON (RADIO) | AV1 → AV2 / → AV3 | (FORCED *) A & B AUDIO CHANNELS + COMP. VID. OR RGB IF TRANSMITTED / (NOT FORCED) A & B AUDIO CHANNELS + COMP. VID. OR RGB IF TRANSMIT'D |
| 9 | OFF | -- | ON (AV) | ON | AV1 → AV2 / → AV3 | NOT RELEVANT / (NOT FORCED) COMP. VID. + A & B AUDIO CHANNELS |
| 10 | ON | ON | | OFF | AV3 ← AV2 | (NOT FORCED) COMP. VID. + A & B AUDIO CHANNELS |

```
*   TV PROTOCOL DETERMINES IF TV TERRESTRIAL IS AVAILABLE
#   TO MONITOR VIDEO RECORDING OF TERRESTRIAL BROADCAST
@   VCR SIGNAL TAKES PRIORITY ON AV2 INPUT
```

FIG. 2

AV1
(SAT)

10

20

SIGNAL
PROCESSOR 13

LOGIC 12

VCR
STATUS 11

8    2    6    20

AV3
(VCR) 9

14

S
W
I
T
C
H
I
N
G

8    19    1    3    AV2 (TV)

8

APPLICATION 1

WATCHING VIDEO PLAYBACK ONLY
PIN 8 HIGH — TV FORCED TO AV2
NO SIGNAL AT AV1

FIG. 3

EP 0 507 433 A1

AV1
(SAT)

10

20

14

SIGNAL
PROCESSOR    13

S
W
I
T
C
H
I
N
G

LOGIC    12

| 8 | 19 | 1 | 3 | AV2 (TV) |

8

VCR
STATUS    11

APPLICATION 2

MONITORING VCR RECORDING
PIN 8 LOW - TV SELECT AV2
NO SIGNAL AT AV1

| 8 | 2 | 6 | 20 |

AV3
(VCR)

9

FIG. 4

Fig. 5

APPLICATIONS 3, 4, 6 (RGB SIGNAL)

3 - WATCHING SATELLITE
4 - WATCHING & RECORDING SATELLITE
6 - WATCHING SATELLITE - RECORDING TERRESTRIAL

PIN 8 LOW
FAST BLANKING ACTIVE
TV FORCED TO RGB

AV2 (TV)

8 16 19 1 3 7 11 15

SWITCHING

SIGNAL PROCESSOR

LOGIC

VCR STATUS

AV1 (SAT)

20 6 2 16 15 11 7

AV3 (VCR)

8 19 1 3

FIG. 6

APPLICATIONS 3, 4, 6 (IF TV DOES NOT HAVE RGB)

3 - WATCHING SATELLITE
4 - WATCHING & RECORDING SATELLITE
6 - WATCHING SATELLITE - RECORDING TERRESTRIAL
PIN 8 LOW
TV FORCED TO AV2

EP 0 507 433 A1

EP 0 507 433 A1

AV1
(SAT)

10

| 20 | 6 | 2 |

14

SIGNAL
PROCESSOR

13

S
W
I
T
C
H
I
N
G

12

LOGIC

8

| 8 | 19 | 1 | 3 |

AV2 (TV)

VCR
STATUS

11

APPLICATION 5

SATELLITE (OR COMPUTER) ON BUT WATCHING VCR
PIN 8 HIGH – TV FORCED TO AV2
SWITCHING GIVES VCR PRIORITY OVER SATELLITE

| 8 | 2 | 6 | 20 |

AV3
(VCR)

9

FIG. 7

AV1
(SAT)

20     10

14

SIGNAL
PROCESSOR    13

LOGIC    12

S
W
I
T
C
H
I
N
G

8

8    AV2 (TV)

APPLICATION 7

WATCHING TV ONLY

VCR
STATUS    11

9

8

AV3
(VCR)

FIG. 8

EP 0 507 433 A1

AV1
(SAT)

10

| 20 | 6 | 2 |

13

SIGNAL
PROCESSOR

14

S
W
I
T
C
H
I
N
G

12

LOGIC

8

| 8 | 19 | 1 | 3 | AV2 (TV)

VCR
STATUS

11

APPLICATION 8

RECORDING STEREO SOUND FROM SATELLITE
& MONITORING SAME ON TV

| 8 | 19 | 1 | 3 |

AV3
(VCR)

9

Fig. 9

EP 0 507 433 A1

AV1
(SAT)
10

20  6  2

SIGNAL PROCESSOR — 13

LOGIC — 12

VCR STATUS — 11

8  19  1  3

AV3
(VCR)
9

SWITCHING — 14

8

AV2 (TV)
8

APPLICATION 9

RECORDING FROM SATELLITE WITHOUT MONITORING

FIG. 10

EP 0 507 433 A1

AV1
(SAT)

| 20 | |

SIGNAL
PROCESSOR — 13

LOGIC — 12

VCR
STATUS — 11

| 8 | 19 | 2 | 6 | 20 |

AV3
(VCR)

9

S
W
I
T
C
H
I
N
G — 14

| 8 | 20 | 19 | 1 | 3 |

8

AV2 (TV)

APPLICATION 10

PIP VCR RECORDING OR MONITORING

FIG. 11

EP 0 507 433 A1

FIG. 12

FIG.13A

FIG.13B

**European Patent Office**

# EUROPEAN SEARCH REPORT

Application Number

EP 92 30 0813

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 613 163 (RS 80) * Page 1, lines 1-6; page 6, line 3 - page 7, line 27; abstract; claims * | 1,2,4 | H 04 N 5/76 |
| Y | | 3,5,6 | |
| Y | FR-A-2 583 945 (PARRIAUX) * Page 8, lines 5-21 * | 3,5,6 | |
| A | IEE PROCEEDINGS SECTION A A I, vol. 129, no. 7, part A, September 1982, pages 493-506; J.C. MacKELLAR: "Television receiver design" * Page 505, right-hand column, line 6 - page 506, right-hand column, line 15 * | 1,4 | |
| A | PATENT ABSTRACTS OF JAPAN, vol. 14, no. 465 (P-1114), 9th October 1990; & JP-A-2 183 484 (SANYO) 18-07-1990 * Whole abstract * | 1-6 | |

TECHNICAL FIELDS SEARCHED (Int. Cl.5)

H 04 N

The present search report has been drawn up for all claims

| Place of search | Date of completion of the search | Examiner |
|---|---|---|
| THE HAGUE | 26-05-1992 | BERWITZ P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)